# FASCICULE DE BREVET EUROPEEN

(11) **EP 4 486 650 B1**
(45) Date de publication et mention de la délivrance du brevet: **11.02.2026**
(21) Numéro de dépôt: 23708532.9
(22) Date de dépôt: 21.02.2023
(51) Int. Cl.: B64D 35/08, B64D 27/24, F02C 7/36, F01D 15/10

(54) **ENSEMBLE PROPULSIF AMÉLIORÉ POUR AÉRONEF HYBRIDE MULTI MOTEURS**
VERBESSERTES ANTRIEBSMONTAGE FÜR MEHRMOTORIGE HYBRIDFLUGZEUGE
IMPROVED PROPULSION ASSEMBLY FOR MULTI-ENGINE HYBRID AIRCRAFT

(30) Priorité: 03.03.2022 FR 2201843
(43) Date de publication de la demande: 08.01.2025
(73) Titulaire: Safran Helicopter Engines, 64510 Bordes (FR)
(72) Inventeur: FULLERINGER, Benjamin, Nicolas, 77550 MOISSY-CRAMAYEL (FR); MOUTAUX, Antoine, Pascal, 77550 MOISSY-CRAMAYEL (FR); THIRIET, Romain, Jean, Gilbert, 77550 MOISSY-CRAMAYEL (FR)
(74) Mandataire: Cabinet Beau de Loménie
(86) Numéro de dépôt international: PCT/FR2023/050247
(87) Numéro de publication internationale: WO 2023/166256

(56) Documents cités:
- FR-A1- 3 039 614
- US-A1- 2011 049 891
- US-B2- 8 727 820

## Description

### Domaine Technique

La présente invention concerne le domaine des aéronefs hybridés, comprenant au moins deux moteurs tels que des turbomoteurs ou des turbopropulseurs, pour des engins volants tels des hélicoptères ou avions bimoteurs. En particulier, l'invention concerne un ensemble propulsif pour aéronef hybridé multi moteurs, notamment bimoteur, et un aéronef hybridé comprenant un tel ensemble propulsif.

### Technique antérieure

De manière connue, une turbomachine, par exemple un turbomoteur, notamment pour un hélicoptère, comporte une turbine à gaz ayant un générateur de gaz et une turbine libre entraînée en rotation par le flux de gaz généré par le générateur de gaz.

Traditionnellement, le générateur de gaz comporte au moins un compresseur et une turbine couplés en rotation. Le principe de fonctionnement est le suivant : l'air frais entrant dans la turbine à gaz est comprimé du fait de la rotation du compresseur avant d'être envoyé vers une chambre de combustion où il est mélangé à un carburant. Les gaz brûlés du fait de la combustion sont ensuite évacués à grande vitesse. Il se produit alors une première détente dans la turbine du générateur de gaz, durant laquelle cette dernière extrait l'énergie nécessaire à l'entraînement du compresseur. La turbine du générateur de gaz n'absorbe pas toute l'énergie cinétique des gaz brûlés et l'excédent d'énergie cinétique correspond au flux de gaz généré par le générateur de gaz. Ce dernier fournit donc de l'énergie cinétique à la turbine libre de sorte qu'il se produit une seconde détente dans la turbine libre qui transforme cette énergie cinétique en énergie mécanique afin d'entraîner un organe récepteur, tel le rotor de l'hélicoptère.

Certains aéronefs comportent deux turbomachines ou plus, comprenant chacune une turbine à gaz telle que décrite ci-dessus. C'est le cas notamment des hélicoptères bimoteurs ou multi moteurs. De tels aéronefs permettent un fonctionnement en mode SEO (pour « Single Engine Operative » en anglais). Le mode SEO est un mode de fonctionnement d'une architecture bimoteur dans lequel une des turbines à gaz est volontairement arrêtée, l'autre assurant l'intégralité de la fourniture de puissance. Ce mode permet d'optimiser la consommation spécifique, qui diminue avec la puissance fournie par une turbomachine. En effet, la consommation spécifique d'une turbine diminuant avec la puissance fournie, il est en effet préférable de fournir 100% de la puissance avec une turbine, plutôt que 50% par chacune d'entre elle.

Un des points critiques du mode SEO réside dans la capacité à rallumer la turbine arrêtée en cas de perte de puissance de la turbine en fonctionnement. Afin d'assurer un redémarrage le plus rapide possible, il est possible de maintenir la turbine arrêtée en mode veille (ou « super ralenti »), c'est-à-dire de continuer à faire tourner son générateur de gaz au moyen exclusif d'une machine électrique, sans apport de carburant. Le générateur étant alors maintenu dans sa « fenêtre d'allumage » (typiquement 10-30%) afin de permettre un allumage immédiat du carburant, soit en mode « super-ralenti » au moyen d'une combustion en super-ralenti assisté d'un apport de puissance électrique via une machine électrique, afin de bénéficier d'une chambre de combustion chaude.

Pour réaliser ces fonctions, des solutions existantes proposent par exemple d'utiliser la puissance fournie par la turbine en fonctionnement, prélevée sur le rotor principal, pour alimenter la machine électrique fournissant la puissance à la turbine en mode veille, au moyen d'une machine électrique dédiée sur chaque générateur de gaz. Cette configuration nécessite donc quatre machines électriques en tout. Plus généralement, les applications bimoteur impliquent de nombreuses fonctions, telles que le démarrage du générateur de gaz, la génération d'électricité au sol, ou la fourniture de puissance électrique au rotor principal. FR 3 039 614 A1 divulgue un exemple d'aéronef bimoteur, et US 8 727 820 B2 et US 2011/049891 A1 divulguent des exemples de systèmes de propulsion hybridés comprenant une machine électrique.

Les solutions existantes, permettant de réaliser ces fonctions, nécessitent un nombre élevé de machines électriques pour certaines de puissance très supérieure à celle des génératrices/démarreurs habituellement utilisés, typiquement plusieurs dizaines à quelques centaines de kilowatts, au lieu d'une dizaine de kilowatts, et ne sont pas entièrement satisfaisantes. Il existe donc un besoin pour un ensemble propulsif d'aéronef bimoteur ou multi moteurs présentant une architecture répondant au moins en partie aux inconvénients précités.

### Exposé de l'invention

Le présent exposé concerne un ensemble propulsif pour aéronef hybridé, notamment d'hélicoptère multi moteurs, comprenant :
- au moins une première turbine à gaz et une deuxième turbine à gaz ayant chacune un générateur de gaz et une turbine libre entraînée en rotation par un flux de gaz généré par le générateur de gaz,
- un rotor principal couplé à la turbine libre de la première turbine à gaz et de la deuxième turbine à gaz par l'intermédiaire d'un premier et d'un deuxième moyen de couplage principal respectivement,
- une première machine électrique réversible et une deuxième machine électrique réversible chacune apte à être couplée au générateur de gaz de la première turbine à gaz et de la deuxième turbine à gaz respectivement, par l'intermédiaire d'un premier moyen de couplage désactivable, et à être chacune couplée au rotor principal par l'intermédiaire d'un deuxième moyen de couplage désactivable, les premiers moyens de couplage désactivables étant chacun configurés pour être activés lorsque la première et la deuxième machine électrique tournent dans un premier sens de rotation, et les deuxièmes moyens de couplage désactivables étant configurés pour être activés lorsque la première et la deuxième machine électrique tournent dans un deuxième sens de rotation opposé au premier sens de rotation.

Par « moyens de couplage désactivables », on entend que les moyens de couplage peuvent être dans une position activée dans laquelle les organes reliés auxdits moyens de couplage sont couplés, ou dans une position désactivée dans laquelle lesdits organes sont découplés, étant entendu que par "organe" on entend les machines électriques, le rotor principal et le générateur de gaz.

On comprend également que chaque machine électrique est associée à un premier moyen de couplage désactivable et à un deuxième moyen de couplage désactivable. En d'autres termes, la première machine électrique réversible est couplée au générateur de gaz de la première turbine à gaz par l'intermédiaire d'un premier moyen de couplage désactivable, et est couplée au rotor principal par l'intermédiaire d'un deuxième moyen de couplage désactivable. De la même façon, la deuxième machine électrique réversible est couplée au générateur de gaz de la deuxième turbine à gaz par l'intermédiaire d'un premier moyen de couplage désactivable, et est couplée au rotor principal par l'intermédiaire d'un deuxième moyen de couplage désactivable.

L'ensemble propulsif selon le présent exposé est particulièrement avantageux en ce que chaque turbine à gaz est associée à une seule machine électrique, les machines électriques pouvant alternativement assurer des fonctions spécifiques et assurer des fonctions complémentaires, tout en assurant ensemble le niveau de redondance nécessaire sur les fonctions critiques pour accroitre la sécurité du vol.

Plus précisément, la première et la deuxième machine électrique peuvent être utilisées dans un sens de rotation pour être couplées mécaniquement au générateur de gaz de la première et de la deuxième turbine à gaz, et dans l'autre sens de rotation pour être couplée mécaniquement au rotor principal. En particulier, la première (et/ou la deuxième) machine électrique tournant dans le premier sens de rotation permet le couplage avec le générateur de gaz de la première (et/ou de la deuxième) turbine à gaz afin de démarrer ce dernier au sol, mais permet également le couplage avec ledit générateur de gaz afin de compléter la puissance thermodynamique dans certaines phases de vol, pour l'assistance aux phases transitoires ou la modification du point de fonctionnement moteur par exemple.

En outre, la première (et/ou la deuxième) machine électrique tournant dans le premier sens de rotation permet de redémarrer le générateur de gaz de la première (et/ou de la deuxième) turbine à gaz en vol, par exemple suite à une panne de celui-ci, sans nécessiter l'activation d'un autre organe mécanique tel qu'un embrayage. De plus, même lorsque la première (ou la deuxième) machine électrique est utilisée dans le premier sens de rotation pour redémarrer le générateur de gaz en vol, la deuxième (ou la première) machine électrique peut être utilisée parallèlement pour assister la deuxième turbine à gaz en fournissant un complément de puissance au rotor principal.

Par ailleurs, la première et/ou la deuxième machine électrique tournant dans le deuxième sens de rotation permettent d'entrainer le rotor principal en remplacement de la première et/ou de la deuxième turbine à gaz en cas de panne de cette dernière, ou en complément de celle-ci dans certaines phases de vol nécessitant un apport supplémentaire de puissance.

De plus, lors d'un fonctionnement en mode SEO, lorsque la première (ou la deuxième) turbine à gaz entraine seule le rotor principal, la deuxième (ou la première) machine électrique peut être utilisée pour maintenir le générateur de gaz de la deuxième (ou de la première) turbine à gaz en mode veille, ou pour apporter de l'énergie électrique à la première (ou la deuxième) machine électrique lorsque le mode veille est assuré par un moyen d'accouplement tel qu'un embrayage ou un crabot décrit ci-après.

Dans le même temps, la première (ou la deuxième) machine électrique peut être utilisée pour apporter un complément de puissance au générateur de gaz de la première (ou de la deuxième) turbine à gaz. En d'autres termes, cette architecture permet, en mode SEO, de maintenir l'un des générateur de gaz en mode veille autorisant un redémarrage rapide, tout en permettant une hybridation interne, c'est-à-dire un échange de puissance entre les machines électriques et les générateurs de gaz pour limiter le vieillissement de la turbine à gaz maintenue allumée.

Par conséquent, l'architecture multi moteurs selon le présent exposé présente l'avantage d'être simple en limitant le nombre de composants et de connexions. Il est ainsi possible de rationaliser et de limiter le nombre de machines électriques, tout en permettant de réaliser un nombre élevé de fonctions en mutualisant celles-ci, et en diminuant la masse du dispositif.

Dans certains modes de réalisation, la première machine électrique et la deuxième machine électrique sont configurées pour fonctionner en mode moteur dans lequel elles sont aptes à apporter de la puissance au rotor principal ou au générateur de gaz de la première et de la deuxième turbine à gaz respectivement, selon leur sens de rotation, ou en mode génératrice dans lequel elles sont aptes à être entraînées en rotation par le rotor principal ou par ledit générateur de gaz en bloquant l'un ou l'autre du premier ou du deuxième moyen de couplage désactivable, de manière à générer de l'énergie électrique.

Les moyens de couplage désactivables associés à chaque machine électrique peuvent être blocables. Ils peuvent par exemple comprendre des moyens de blocage mobiles entre une position libre dans laquelle le générateur de gaz (par exemple) ne peut pas entraîner en rotation la machine électrique, et une position bloquée dans laquelle le générateur de gaz est apte à entraîner en rotation la machine électrique, de manière à ce que la machine électrique prélève de la puissance électrique au générateur de gaz.

Le blocage des moyens de couplage désactivables permet de forcer l'accouplement entre les machines électriques et le générateur de gaz (ou le rotor principal). Par exemple, lorsque le moyen de couplage comprend une roue-libre et un moyen de blocage, la roue libre est dite « roue libre blocable », de telle sorte qu'en position bloquée, le moyeu de la roue libre peut entraîner en rotation la couronne périphérique de la roue-libre blocable. En d'autres termes, le générateur de gaz (ou le rotor principal) est apte à entraîner en rotation la première ou la deuxième machine électrique.

Autrement dit, les machines électriques peuvent être utilisées pour prélever de la puissance sur le générateur de gaz ou le rotor principal et ainsi fournir de la puissance électrique au réseau de bord en mode APU (« Auxilary Power Unit ») au sol pour le rechargement des batteries par exemple, ou en vol en complément ou en remplacement de l'une des machines électriques en cas de défaillance de celle-ci par exemple, via une connexion électrique entre la première machine électrique et la deuxième machine électrique.

Dans certains modes de réalisation, l'ensemble propulsif comprend un premier moyen d'accouplement couplé au rotor principal et au générateur de gaz de la première turbine à gaz, et un deuxième moyen d'accouplement couplé au rotor principal et au générateur de gaz de la deuxième turbine à gaz, le premier et le deuxième moyen d'accouplement étant mobiles entre une position de découplage, et une position de couplage dans laquelle le rotor principal est couplé avec le générateur de gaz de la première et de la deuxième turbine à gaz respectivement.

Le premier et le deuxième moyen d'accouplement peuvent être des systèmes mécaniques tels que des embrayages, des crabots ou des crabots à angle de dépouille permettant un débrayage automatique en cas de redémarrage rapide. En position de découplage, le rotor principal ne peut pas entrainer le générateur de gaz. En position de couplage, le rotor principal et le générateur de gaz de la première (ou de la deuxième) turbine à gaz sont mécaniquement reliées, de telle sorte que ledit générateur de gaz peut être entrainé, même à faible vitesse, par le rotor principal.

Le premier système d'accouplement, par exemple, constitue ainsi une branche de dérivation permettant de contourner la première machine électrique et les moyens de couplage désactivables qui lui sont associés, de telle sorte que le mode veille de la première turbine à gaz peut être assuré tout en libérant la première machine électrique. Cette dernière peut alors être utilisée pour d'autres fonctions telles que l'hybridation interne (apport d'énergie électrique à la deuxième machine électrique par exemple), en mode génératrice par blocage du deuxième moyen de couplage désactivable.

La présence des moyens d'accouplement permet de s'affranchir de l'utilisation d'une troisième machine électrique, qui serait nécessaire pour réaliser l'hybridation interne en apportant notamment de l'énergie électrique à la première et à la deuxième machine électrique en l'absence de moyen d'accouplement. Ainsi, seulement deux machines électriques sont nécessaires en mode SEO pour réaliser les fonctions souhaitées, ce qui permet de simplifier l'architecture et de limiter la masse de l'ensemble propulsif.

Dans certains modes de réalisation, lorsque l'une de la première ou de la deuxième turbine à gaz entraine seule le rotor principal, le générateur de gaz de l'autre de la première ou de la deuxième turbine à gaz est maintenu dans un mode veille, à une puissance inférieure à 5kW, par l'intermédiaire du premier ou du deuxième moyen d'accouplement en position de couplage.

Lorsque l'aéronef fonctionne en mode SEO, la première turbine à gaz, par exemple, assure l'intégralité de la fourniture de puissance, alors que la deuxième turbine à gaz est volontairement arrêtée, ou de préférence mise en mode veille, afin d'optimiser la consommation spécifique. Le mode veille permet de maintenir le générateur de gaz de la deuxième turbine à gaz à faible puissance, inférieure à 5kW, ou dans une plage de 5 à 30% de sa vitesse de rotation nominale, afin de permettre un rallumage rapide en cas de nécessité, notamment lorsque la première turbine à gaz s'arrête involontairement. Ce maintien en mode veille par le deuxième moyen d'accouplement, en position de couplage, permet également de libérer la deuxième machine électrique pour d'autres fonctions telles que l'hybridation interne. Cette configuration est particulièrement avantageuse dans la mesure où les machines électriques, dimensionnées pour allumer rapidement les turbines à gaz en fournissant notamment plusieurs dizaines de kilowatts ou pour assister le rotor en fournissant quelques centaines de kilowatts, ne sont pas accaparées pour le maintien en mode veille, nécessitant moins de 5kW.

Dans certains modes de réalisation, lorsque la première turbine à gaz entraine seule le rotor principal, la première machine électrique fonctionne en mode moteur de manière à apporter de la puissance au générateur de gaz de la première turbine à gaz, et la deuxième machine électrique fonctionne en mode génératrice de manière à apporter de l'énergie électrique à la première machine électrique.

On comprend que la première machine électrique fonctionne en mode moteur en tournant dans le premier sens de rotation, de manière à apporter de la puissance au générateur de gaz de la première turbine à gaz par l'intermédiaire du premier moyen de couplage désactivable. De même, la deuxième machine électrique fonctionne en mode génératrice en étant entrainée par le rotor principal, le deuxième moyen de couplage désactivable étant alors bloqué, de manière à apporter de l'énergie électrique à la première machine électrique et ainsi limiter le vieillissement de celle-ci. On notera pour ce faire que la première machine électrique peut être connectée électriquement à la deuxième machine électrique par l'intermédiaire d'une connexion électrique.

Dans certains modes de réalisation, lorsque la deuxième turbine à gaz entraine seule le rotor principal, la deuxième machine électrique fonctionne en mode moteur de manière à apporter de la puissance au générateur de gaz de la deuxième turbine à gaz, et la première machine électrique fonctionne en mode génératrice de manière à apporter de l'énergie électrique à la deuxième machine électrique. Grâce à cette architecture, il est ainsi possible, par l'intermédiaire de deux machines électriques seulement, de limiter le vieillissement de la seule turbine à gaz en fonctionnement, tout en assurant une hybridation interne, par l'intermédiaire d'une des machines électriques alimentant électriquement l'autre machine électrique.

Dans certains modes de réalisation, l'ensemble propulsif est configuré de telle sorte que, lorsque la première turbine à gaz entrainant seule le rotor principal s'arrête, la deuxième machine électrique fonctionne en mode moteur de manière à apporter une puissance supérieure ou égale à 50 kW au générateur de gaz de la deuxième turbine à gaz.

Dans certains modes de réalisation, l'ensemble propulsif est configuré de telle sorte que, lorsque la deuxième turbine à gaz entrainant seule le rotor principal s'arrête, la première machine électrique fonctionne en mode moteur de manière à apporter une puissance supérieure ou égale à 50 kW au générateur de gaz de la première turbine à gaz.

Lorsque l'aéronef fonctionne en mode SEO, et l'une ou l'autre des turbines à gaz entrainant seule le rotor principal s'arrête de manière involontaire, l'autre des turbines à gaz maintenue en mode veille peut ainsi être redémarrée rapidement par l'injection d'une puissance importante, supérieure ou égale à 50 kW, au générateur de gaz de cette dernière.

Dans certains modes de réalisation, l'ensemble propulsif comprend une troisième machine électrique réversible apte à être couplée au rotor principal et à la turbine libre de la première turbine à gaz et de la deuxième turbine à gaz par l'intermédiaire du premier moyen de couplage principal et du deuxième moyen de couplage principal respectivement.

Dans certains modes de réalisation, la troisième machine électrique est configurée pour fonctionner en mode génératrice, dans lequel elle est apte à être entraînée en rotation par le rotor principal, lui-même entrainé par la turbine libre de la première et/ou de la deuxième turbine à gaz par l'intermédiaire du premier et/ou du deuxième moyen de couplage principal, de manière à générer de l'énergie électrique, ou en mode moteur dans lequel elle est apte à apporter de la puissance au rotor principal.

Bien que redondante avec la première et la deuxième machine électrique dans la plupart des modes de fonctionnement, l'utilisation d'une troisième machine électrique permet de réaliser de l'hybridation interne symétrique lorsque les deux turbines à gaz sont allumées, ce qui n'est pas possible lorsque seules les première et deuxième machines électriques sont présentes. Elle permet également de s'affranchir de l'utilisation de deuxième moyens de couplage désactivables blocables, et donc de simplifier la structure de l'ensemble (seuls les premiers moyens de couplage désactivables seraient alors blocables), en permettant une génération électrique à partir du rotor principal.

Dans certains modes de réalisation, lorsque la première turbine à gaz entraine seule le rotor principal, le générateur de gaz de la deuxième turbine à gaz est maintenu en mode veille, à une puissance inférieure à 5kW, par l'intermédiaire de la deuxième machine électrique qui fonctionne en mode moteur. De préférence, la première machine électrique fonctionne en mode moteur de manière à apporter de la puissance au générateur de gaz de la première turbine à gaz, et la troisième machine électrique fonctionne en mode génératrice de manière à apporter de l'énergie électrique à la première et à la deuxième machine électrique.

L'utilisation d'une troisième machine électrique permet de s'affranchir de l'utilisation du premier et du deuxième moyen d'accouplement, limitant ainsi le nombre des organes de transmission. En effet, En mode SEO, la troisième machine électrique peut être utilisée en mode génératrice pour alimenter la deuxième machine électrique qui maintient la deuxième turbine à gaz en mode veille, et pour alimenter la première machine électrique afin de réaliser l'hybridation interne et limiter le vieillissement de la première turbine à gaz. La troisième machine électrique peut également être utilisée en mode moteur pour compléter la puissance fournie par la première turbine à gaz, dans certaines phases de fonctionnement. On notera que l'ensemble propulsif peut également comprendre la troisième machine électrique en combinaison avec les moyens d'accouplement précités, afin d'augmenter le niveau de redondance.

Dans certains modes de réalisation, lorsque la deuxième turbine à gaz entraine seule le rotor principal, le générateur de gaz de la première turbine à gaz est maintenu dans un mode veille, à une puissance inférieure à 5kW, par l'intermédiaire de la première machine électrique qui fonctionne en mode moteur. De préférence, la deuxième machine électrique fonctionne en mode moteur de manière à apporter de la puissance au générateur de gaz de la deuxième turbine à gaz, et la troisième machine électrique fonctionne en mode génératrice de manière à apporter de l'énergie électrique à la première et à la deuxième machine électrique.

Dans certains modes de réalisation, l'ensemble propulsif comprend un frein rotor apte à être disposé entre la turbine libre de la première et de la deuxième turbine à gaz, et le rotor principal, en étant mobile entre une position de freinage empêchant l'entrainement du rotor principal par la turbine libre de la première et/ou de la deuxième turbine à gaz ou des efforts extérieurs, et une position libre permettant l'entrainement du rotor principal par ladite turbine libre.

Plus précisément, la turbine libre de la première et de la deuxième turbine à gaz est couplée au rotor principal, tandis qu'un frein rotor mobile disposé sur la chaine cinématique en permet le blocage. Lors du démarrage, les gaz chauds entrainent la turbine libre. Cette dernière, reliée au rotor principal par l'intermédiaire du premier ou du deuxième moyen de couplage principal, peut être soit libre lorsque le frein rotor est en position libre, soit bloquée par le frein rotor lorsque ce dernier est en position de freinage. Cette position de freinage permet donc de bloquer le rotor principal et par effet collatéral la turbine libre, notamment en cas de démarrage par vent fort.

Dans certains modes de réalisation, le premier et le deuxième moyen de couplage principal, et le premier et deuxième moyens de couplage désactivables associés à chacune de la première et de la deuxième machine électrique, comprennent une roue libre.

Un intérêt de la roue libre est qu'elle ne nécessite pas d'être commandée électroniquement ou mécaniquement par un opérateur extérieur. La roue libre présente en outre une fiabilité importante. Une telle roue libre est généralement constituée d'un moyeu et d'une couronne périphérique montée rotative sur le moyeu. Le moyeu pouvant généralement entraîner en rotation la couronne périphérique lorsque le couple est appliqué dans le sens prévu. La couronne périphérique peut entrainer en rotation le moyeu lorsque le couple est appliqué dans l'autre sens sans remettre en cause le principe de la présente invention. Aussi, le moyeu ne peut entraîner la couronne que lorsque le moyeu tourne dans un sens prédéterminé par rapport à la couronne, que l'on appellera « sens d'engagement ». Dans le cas contraire, le moyeu et la couronne périphérique tournent librement l'un par rapport à l'autre.

En l'espèce, les moyens de couplage désactivables sont activés lorsque le moyeu de la roue libre entraîne en rotation la couronne périphérique, et, à l'inverse, les moyens de couplage désactivables sont désactivés lorsque le moyeu de la roue libre n'entraîne pas en rotation la couronne périphérique. Le fait d'utiliser des roues libres comme éléments de couplage entre les différents organes, en l'absence d'autres moyens de couplage tels que des embrayages ou des crabots, permet d'améliorer la fiabilité de l'ensemble propulsif.

Dans certains modes de réalisation, l'ensemble propulsif comprend une unité de contrôle configurée pour contrôler la première machine électrique, la deuxième machine électrique, la troisième machine électrique, les moyens de couplage désactivables, et le frein rotor.

Le présent exposé concerne également un aéronef hybridé comprenant un ensemble propulsif selon l'un quelconque des modes de réalisation précédents, l'aéronef hybridé étant un hélicoptère multi moteurs, notamment bimoteur.

On comprend par « aéronef hybridé », un aéronef comprenant un moteur thermique permettant d'entrainer en rotation un rotor principal, et au moins une machine électrique permettant d'apporter de la puissance au moteur thermique.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue en coupe d'un ensemble propulsif pour aéronef bimoteur selon l'invention,
[Fig. 2] La figure 2 représente schématiquement l'ensemble propulsif de la figure 1,
[Fig. 3] La figure 3 représente l'ensemble propulsif de la figure 2, selon un premier mode de fonctionnement,
[Fig. 4] La figure 4 représente l'ensemble propulsif de la figure 2, selon un deuxième mode de fonctionnement,
[Fig. 5] La figure 5 représente l'ensemble propulsif de la figure 2, selon un troisième mode de fonctionnement,
[Fig. 6] La figure 6 représente l'ensemble propulsif de la figure 2, selon un quatrième mode de fonctionnement,
[Fig. 7] La figure 7 représente l'ensemble propulsif de la figure 2, selon un cinquième mode de fonctionnement,
[Fig. 8] La figure 8 représente l'ensemble propulsif de la figure 2, selon un sixième mode de fonctionnement,
[Fig. 9] La figure 9 représente l'ensemble propulsif de la figure 2, selon un septième mode de fonctionnement,
[Fig. 10] La figure 10 représente l'ensemble propulsif de la figure 2, selon un huitième mode de fonctionnement,
[Fig. 11] La figure 11 représente l'ensemble propulsif de la figure 2, selon un neuvième mode de fonctionnement,
[Fig. 12] La figure 12 représente l'ensemble propulsif de la figure 2, selon un dixième mode de fonctionnement,
[Fig. 13] La figure 13 représente l'ensemble propulsif de la figure 2, selon un onzième mode de fonctionnement,
[Fig. 14] La figure 14 représente l'ensemble propulsif de la figure 2, selon un douzième mode de fonctionnement,
[Fig. 15] La figure 15 représente l'ensemble propulsif de la figure 2, selon un treizième mode de fonctionnement,
[Fig. 16] La figure 16 représente l'ensemble propulsif de la figure 2, selon un quatorzième mode de fonctionnement,
[Fig. 17] La figure 17 représente l'ensemble propulsif de la figure 2, selon un quinzième mode de fonctionnement,
[Fig. 18] La figure 18 représente l'ensemble propulsif de la figure 2, selon un seizième mode de fonctionnement.

### Description des modes de réalisation

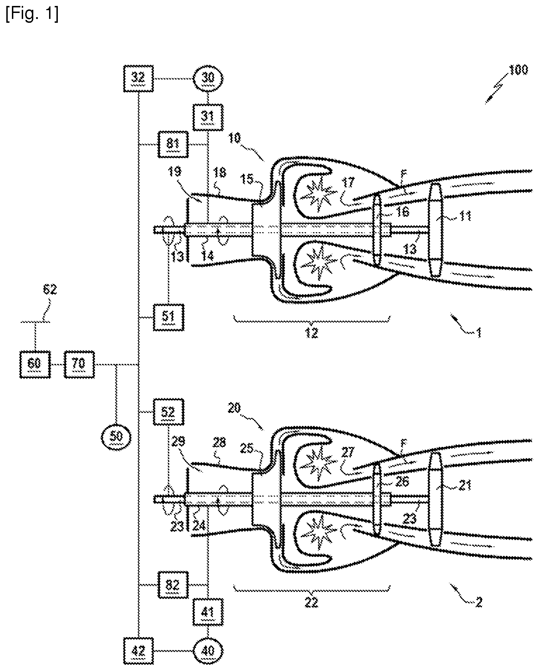

Une architecture d'un ensemble propulsif 100 selon un mode de réalisation de l'invention va être décrite dans la suite de la description, en référence aux figures 1 à 18.

La figure 1 représente de façon schématique un ensemble propulsif 100 d'un aéronef bimoteur, comprenant une première turbomachine 1 et une deuxième turbomachine 2, entrainant en rotation des organes de transmissions 60 d'un hélicoptère portant une hélice ou un rotor principal 62. Les turbomachines peuvent être des turbomoteurs ou des turbopropulseurs. Bien que l'ensemble propulsif décrit dans la suite de la description comprenne deux turbomachines, cet exemple n'est pas limitatif, l'invention s'appliquant également aux ensembles propulsif d'aéronefs multi moteurs comprenant plus de deux moteurs.

La première turbomachine 1 et la deuxième turbomachine 2 sont de préférence identiques et présentent les mêmes caractéristiques. Aussi, la description ci-dessous fait référence à la fois à la première et à la deuxième turbomachine 1, 2.

La première turbomachine 1 et la deuxième turbomachine 2 comprennent respectivement une turbine à gaz 10, 20 ayant un générateur de gaz 12, 22 et une turbine libre 11, 21 apte à être entraînée en rotation par un flux de gaz généré par le générateur de gaz 12, 22. La turbine libre 11, 21 est montée sur un arbre 13, 23 qui transmet le mouvement de rotation à un organe récepteur tel un rotor principal 62 de l'hélicoptère par l'intermédiaire des organes de transmission 60. Selon cet exemple, la turbine à gaz 10, 20 représentée sur la figure 1 est du type à prise de mouvement avant avec renvoi par arbre coaxial. On pourrait très bien considérer, sans sortir du cadre de la présente invention, une turbine à gaz à turbine libre du type à prise de mouvement avant avec renvoi par arbre interne ou extérieur, ou bien une turbomachine à turbine libre du type à prise de mouvement arrière. De la même manière, la turbine pourra être en prise directe ou intégrer un réducteur de vitesse sans remettre en cause le principe de l'invention.

Le générateur de gaz 12, 22 comporte un arbre rotatif 14, 24 sur lequel sont montés un compresseur 15, 25 et une turbine 16, 26, ainsi qu'une chambre de combustion 17, 27 disposée axialement entre le compresseur 15, 25 et la turbine 16, 26 dès lors que l'on considère le générateur de gaz 12, 22 selon la direction axiale de l'arbre rotatif 14, 24. La turbine à gaz 10, 20 présente un carter 18, 28 muni d'une entrée d'air 19, 29 par laquelle l'air frais entre dans le générateur de gaz 12, 22. Après son admission dans l'enceinte du générateur de gaz 12, 22, l'air frais est comprimé par le compresseur 15, 25 qui le refoule vers l'entrée de la chambre de combustion 17, 27 dans laquelle il est mélangé avec du carburant. La combustion qui a lieu dans la chambre de combustion 17, 27 provoque l'évacuation à grande vitesse des gaz brûlés vers la turbine 16, 26, ce qui a pour effet d'entraîner en rotation de l'arbre 14, 24 du générateur de gaz 12, 22 et, par conséquent, le compresseur 16, 26. La vitesse de rotation de l'arbre 14, 24 du générateur de gaz 12, 22 est déterminée par le débit de carburant entrant dans la chambre de combustion 17, 27.

Malgré l'extraction d'énergie cinétique par la turbine 16, 26, le flux de gaz sortant du générateur de gaz présente une énergie cinétique significative. Comme on le comprend à l'aide de la figure 1, le flux de gaz F est dirigé vers la turbine libre 11, 21 ce qui a pour effet de provoquer une détente dans la turbine libre 11, 21 conduisant à la mise en rotation de la roue de turbine et de l'arbre 13, 23.

Le rotor principal 62 est couplé, via les organes de transmission 60, à l'arbre 13 de la turbine libre 11 de la première turbine à gaz 10 par l'intermédiaire d'un premier moyen de couplage principal 51. Le rotor principal 62 est également couplé, via les organes de transmission 60, à l'arbre 23 de la turbine libre 21 de la deuxième turbine à gaz 20 par l'intermédiaire d'un deuxième moyen de couplage principal 52.

De préférence, le premier et le deuxième moyen de couplage principal 51, 52 comprend une roue libre montée de telle sorte que la rotation de l'arbre 13, 23 peut entraîner en rotation le rotor principal 62, mais qu'au contraire, la rotation du rotor principal 62 ne peut pas entraîner en rotation l'arbre 13, 23 de la turbine libre 11, 21. Autrement dit, la roue libre du premier et du deuxième moyen de couplage principal 51, 52 ne peut transférer un couple de rotation que dans le sens de la turbine libre 11, 21 vers le rotor principal 62, mais pas l'inverse. Sur un hélicoptère, cette roue libre est couramment appelée "roue libre moteur". On notera que l'utilisation d'une roue libre pour les moyens de couplage principaux 51, 52 et les moyens de couplage désactivables décrits ci-dessous n'est pas limitative, la roue libre pouvant être remplacée par tout système de crabot ou d'embrayage.

L'ensemble propulsif 100 comporte en outre une première machine électrique réversible 30, couplée mécaniquement à l'arbre 14 du générateur de gaz 12 par l'intermédiaire d'un premier moyen de couplage désactivable 31.

De préférence, le premier moyen de couplage désactivable 31 comprend une roue libre montée de telle sorte que la rotation de la première machine électrique réversible 30 peut entraîner en rotation l'arbre 14 du générateur de gaz 12 lorsque la première machine électrique fonctionne en mode moteur électrique (premier moyen de couplage 31 activé), mais qu'au contraire, la rotation de l'arbre 14 du générateur de gaz 12 ne peut pas entraîner la première machine électrique réversible 30, si le premier moyen de couplage désactivable 31 n'est pas bloqué. Autrement dit, la roue libre du premier moyen de couplage désactivable 31 ne peut transférer un couple de rotation que dans le sens de la première machine électrique 30 vers le générateur de gaz 12, mais pas l'inverse, afin d'associer la grande fiabilité de la roue libre aux fonctions critiques comme le redémarrage de la turbine en vol.

La première machine électrique 30 est également apte à être couplée au rotor principal 62, par l'intermédiaire d'un deuxième moyen de couplage désactivable 32 analogue au premier moyen de couplage désactivable 31 et comprenant de préférence une roue libre, de telle manière que la première machine électrique 30, fonctionnant en mode moteur électrique (deuxième moyen de couplage 32 activé), soit apte à entraîner en rotation le rotor principal 62.

L'ensemble propulsif 100 comporte également une deuxième machine électrique réversible 40, couplée mécaniquement à l'arbre 24 du générateur de gaz 22 par l'intermédiaire d'un premier moyen de couplage désactivable 41.

De préférence, le premier moyen de couplage désactivable 41 comprend une roue libre montée de telle sorte que la rotation de la deuxième machine électrique réversible 40 peut entraîner en rotation l'arbre 24 du générateur de gaz 22 lorsque la deuxième machine électrique fonctionne en mode moteur électrique (premier moyen de couplage 41 activé), mais qu'au contraire, la rotation de l'arbre 24 du générateur de gaz 22 ne peut pas entraîner la deuxième machine électrique réversible 40, si le premier moyen de couplage désactivable 41 n'est pas bloqué. Autrement dit, la roue libre du premier moyen de couplage désactivable 41 ne peut transférer un couple de rotation que dans le sens de la deuxième machine électrique 40 vers le générateur de gaz 22, mais pas l'inverse.

La deuxième machine électrique 40 est également apte à être couplée au rotor principal 62, par l'intermédiaire d'un deuxième moyen de couplage désactivable 42 analogue au premier moyen de couplage désactivable 41 et comprenant de préférence une roue libre, de telle manière que la deuxième machine électrique 40, fonctionnant en mode moteur électrique (deuxième moyen de couplage 42 activé), soit apte à entraîner en rotation le rotor principal 62.

Conformément à l'ensemble propulsif 100 du présent exposé, la première et la deuxième machine électrique 30, 40 sont aptes à tourner dans un premier sens de rotation dans lequel elles sont respectivement couplées mécaniquement à l'arbre 14, 24 du générateur de gaz 12, 22, et dans un deuxième sens de rotation, opposé au premier sens de rotation, dans lequel elle sont respectivement couplées mécaniquement au rotor principal 62. Par convention, on comprendra dans la suite de la description un sens positif, comme un sens de rotation de la première et la deuxième machine électrique 30, 40 dans lequel le premier moyen de couplage désactivable 31, 41 est activé, et un sens négatif, comme un sens de rotation de la première et de la deuxième machine électrique 30, 40 dans lequel le deuxième moyen de couplage 32, 42 est activé.

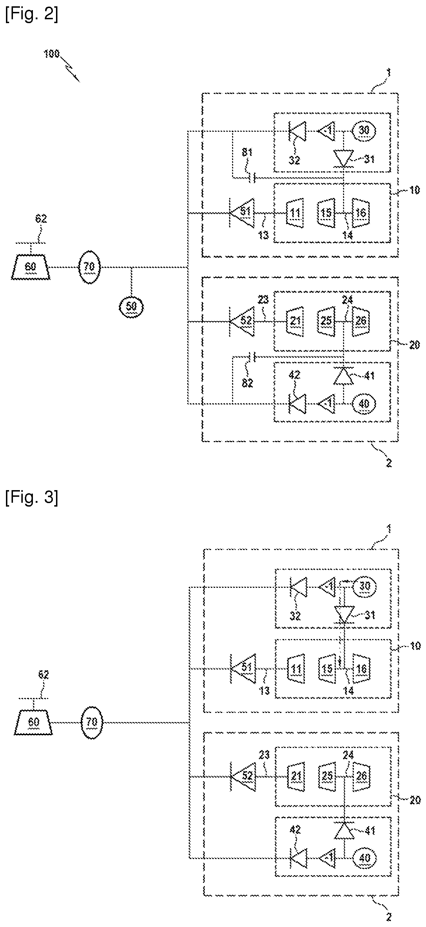

En particulier, l'élément représenté par « -1 » sur la figure 2 et les figures suivantes représente des engrenages, par exemple des pignons, permettant l'inversion du sens de rotation. On comprendra ainsi que lorsque la première et la deuxième machine électrique 30, 40 tournent dans le sens positif, le premier moyen de couplage désactivable 31, 41 est activé, et le deuxième moyen de couplage 32, 42 est désactivé, et lorsque la première et la deuxième machine électrique 30, 40 tournent dans le sens négatif, le premier moyen de couplage désactivable 31, 41 est désactivé, et le deuxième moyen de couplage 32, 42 est activé.

La première et la deuxième machine électrique réversible 30, 40 sont constituées en l'espèce d'un moteur électrique apte à fonctionner de manière réversible en génératrice électrique. Pour ce faire, l'un ou l'autre du premier moyen de couplage désactivable 31, 41 ou du deuxième moyen de couplage désactivable 32, 42 peut être bloqué, par l'intermédiaire d'un moyen de blocage, de manière à pouvoir être entrainé en rotation par le rotor principal 62 ou par le générateur de gaz 12, 22, et ainsi générer de l'énergie électrique. Cette énergie électrique générée par les machines électriques 30, 40 peut alors être transféré vers d'autres éléments de l'ensemble propulsif, par exemple vers un « pack batterie » (non représenté) ou peut être échangé entre les machines électriques 30, 40 pour réaliser de l'hybridation interne.

On notera que bien que la première et la deuxième machine électrique réversible 30, 40 puissent être disposées dans le périmètre turbomachine, cette disposition n'est pas limitative. Les machines électriques réversibles 30, 40 peuvent en effet être disposées dans des périmètres de l'hélicoptère distincts des turbomachines 1, 2, sans sortir du cadre de l'invention. Cette remarque s'applique de manière générale à tout l'ensemble propulsif comprenant également la troisième machine électrique et les différents moyens de couplage décrits dans la suite de la description.

Une troisième machine électrique réversible 50 peut être couplée mécaniquement à l'arbre 13, 23 de la turbine libre 11, 21 par l'intermédiaire du premier et du deuxième moyen de couplage principal 51, 52.

Le premier et le deuxième moyen de couplage principal 51, 52 comprenant une roue libre peuvent également être montés de telle sorte que la rotation de l'arbre 13, 23 peut entraîner en rotation la troisième machine électrique 50 lorsque celle-ci fonctionne en mode génératrice afin de fournir de l'électricité, mais qu'au contraire, la rotation de la troisième machine électrique 50 ne peut pas entraîner en rotation l'arbre 13, 23 de la turbine libre 11, 21. La troisième machine électrique 50 peut également fonctionner en mode moteur électrique de manière à entraîner en rotation le rotor principal 62 pour l'assistance au décollage ou aux transitoires par exemple.

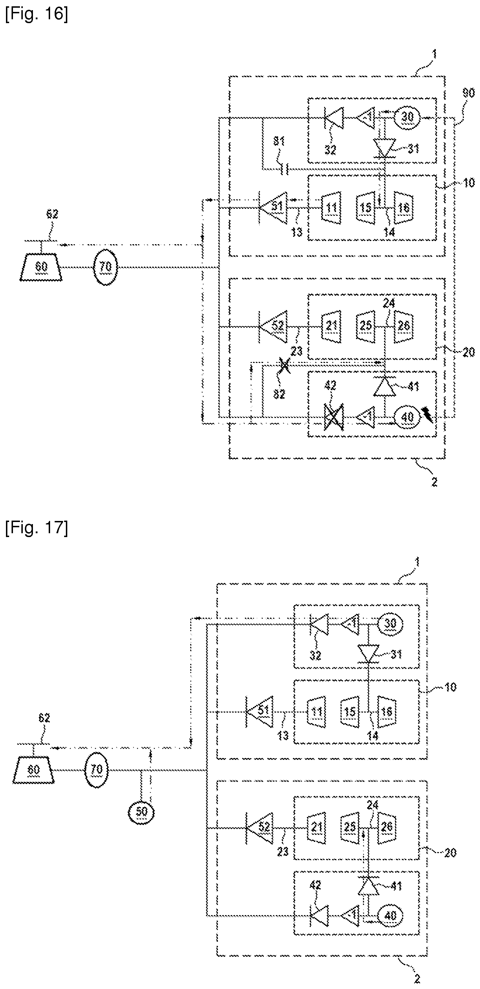

On notera toutefois que bien que la plupart des figures représentent un ensemble propulsif comprenant une troisième machine électrique 50, il est également possible de s'affranchir de l'utilisation de cette dernière, sans sortir du cadre de l'invention. En effet, bien que la troisième machine électrique 50 permette d'augmenter le niveau de redondance, la seule présence de la première et de la deuxième machine électrique 30, 40 selon cette architecture permet d'assurer un nombre élevé de fonctions. En particulier, dans le cas d'un fonctionnement en mode SEO décrit ci-après en référence à la figure 16, l'absence de la troisième machine électrique 50 peut être compensée par la présence d'un premier moyen d'accouplement 81 dans la première turbomachine 1, et d'un deuxième moyen d'accouplement 82 dans la deuxième turbomachine 2.

le premier et le deuxième moyen d'accouplement 81, 82 sont désignés dans la suite de la description comme étant des embrayages, mais d'autres types de moyens d'accouplement peuvent être utilisés, tels que des crabots. Les embrayages 81, 82 sont mobiles entre une position de couplage dans laquelle le rotor principal 62 est couplé avec le générateur de gaz 12, 22 de la première et de la deuxième turbine à gaz 10, 20 respectivement, et une position de découplage dans laquelle ces éléments ne sont pas couplés.

En position de découplage, le rotor principal 62 ne peut pas entrainer le générateur de gaz 12, 22. En position de couplage, le rotor principal 62 et le générateur de gaz 12, 22 sont mécaniquement reliées, de telle sorte que ledit générateur de gaz 12, 22 peut être entrainé, même à faible vitesse, par le rotor principal 62. Ceci permettra notamment d'entrainer le générateur de gaz 12, 22 dans sa fenêtre d'allumage sans accaparer ou solliciter la machine électrique 30, 40. On notera, dans la suite de la description, que la position de couplage des embrayages 81, 82, et la position de blocage du premier moyen de couplage réversible 31, 41 et du deuxième moyen de couplage réversible 32, 42, sont symbolisées sur les figures par une croix barrant ces éléments.

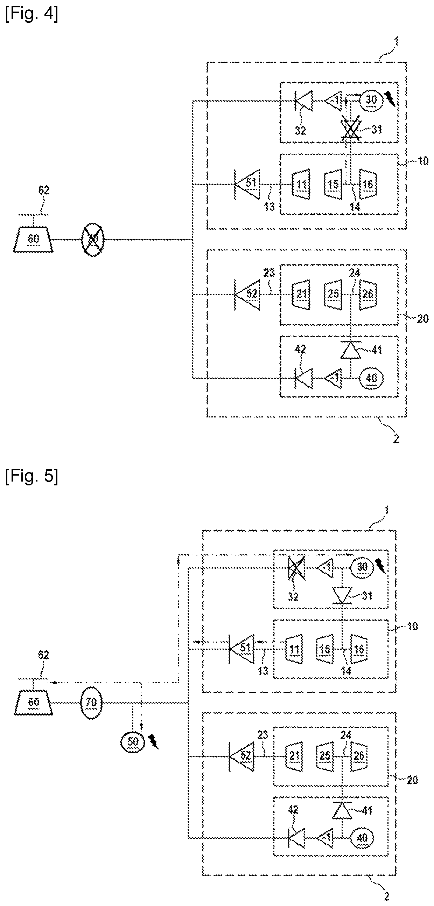

Par ailleurs, le dispositif peut également comprendre un frein rotor 70 disposé entre la troisième machine électrique 50 et le rotor principal 62. Le frein rotor 70 est mobile entre une position de freinage (représentée par une croix sur la figure 4 par exemple), empêchant la rotation du rotor principal 62 et de la turbine libre 11 et/ou 21, et une position libre permettant la rotation du rotor principal 62 et de la turbine libre 11 et/ou 21. On notera toutefois que bien que les figures 1 à 18 représentent un dispositif comprenant un tel frein rotor 70, il est également possible de s'affranchir de l'utilisation de ce dernier, sans sortir du cadre de l'invention. En effet, la fonction de frein rotor peut également être remplie par la première et la deuxième machine électrique 30, 40 fonctionnant en mode génératrice de telle sorte à créer un couple s'opposant à la rotation du rotor principal 62, permettant de freiner, voire bloquer ce dernier. Dans ce cas, le frein rotor 70 peut être sous dimensionné ou absent, ou encore remplacé par un système de blocage de type embrayage ou crabot.

Compte tenu de cette architecture, différentes fonctions sont réalisables par l'ensemble propulsif. Ces différentes fonctions sont décrites ci-dessous en référence aux figures 3 à 18. Sur ces figures, les flèches en traits interrompus représentent un sens de transmission de puissance mécanique ou électrique entre deux éléments. Sur la figure 3 par exemple, une puissance mécanique est transmise de la première machine électrique 30 vers l'arbre 14 du générateur de gaz 12 de la première turbine à gaz 10. On notera en outre de manière générale que, par souci de clarté, les figures 2 à 18 représentent schématiquement et de manière fonctionnelle et simplifiée les différents modes de fonctionnement du dispositif, sans représenter tous les détails des éléments constituant la turbomachine et les différents organes de transmission de puissance. En particulier, les pignons et éventuels rapports de vitesse ne sont pas représentés.

La figure 3 représente un mode de fonctionnement permettant le démarrage de la première turbomachine 1, en particulier de la première turbine à gaz 10. La première machine électrique 30 est pilotée, par exemple par une unité de contrôle (non représentée), de manière à tourner dans le sens positif. Ainsi, elle entraîne le générateur de gaz 12 par l'intermédiaire de la roue libre du premier moyen de couplage 31, permettant le démarrage du générateur de gaz 12.

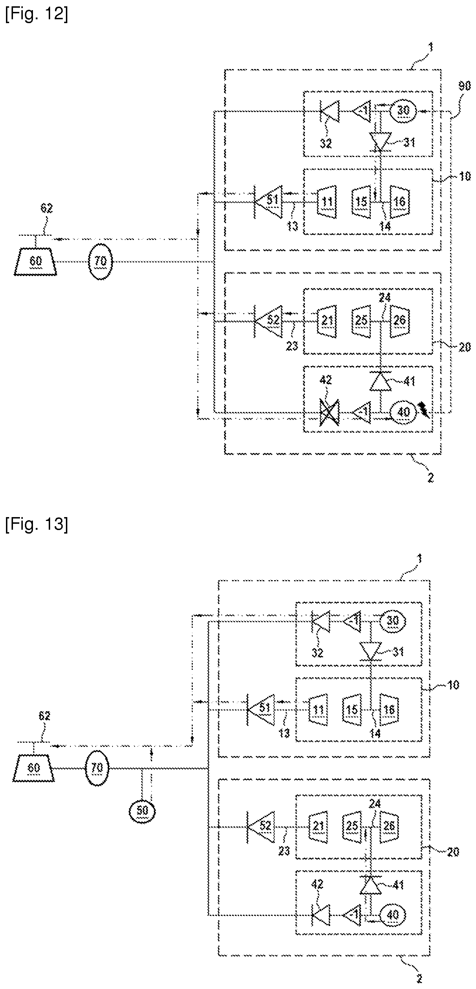

Lors du démarrage, les gaz chauds entrainent la turbine libre 11. Cette dernière, reliée au rotor principal 62 via la roue-libre du premier moyen de couplage principal 51, peut être soit libre, lorsque le frein rotor 60 est en position libre (figure 3), soit bloquée par le frein rotor lorsque que celui-ci est en position de freinage (figure 4). Cette dernière configuration peut être utile en cas de démarrage par vent fort. En outre, la puissance de la première machine électrique 30 étant de l'ordre de plusieurs dizaines à quelques centaines de kilowatts, il est possible de démarrer la turbine beaucoup plus rapidement qu'avec un démarreur d'une puissance de l'ordre de 10kW, habituellement utilisé. Cela procure notamment un avantage opérationnel dans le cas de missions de type secours médical, ou lors des tentatives de redémarrage rapide en vol (décrit ci-après et illustré notamment sur la figure 13).

Dans le cas de figure où le frein rotor 60 est en position de freinage, la première machine électrique 30 peut alors fonctionner en mode génératrice, le mode « génératrice » étant représenté par un petit éclair sur la figure 4 et les figures suivantes. La figure 4 présente ce fonctionnement permettant de générer de l'électricité au sol. Plus précisément, ce mode de fonctionnement, dit mode ou fonction « APU » (pour « Auxiliary Power Unit » en anglais) est un mode de fonctionnement où la première turbine à gaz 10 entraine une génératrice électrique sans entrainer le rotor principal de l'hélicoptère, pour permettre d'assurer l'alimentation des dispositifs électriques au sol, tels que des batteries, équipements de vol, chauffage ou climatisation. En particulier, ce mode permet de recharger les batteries qui pourront être utilisées en vol pour alimenter les machines électriques pour réaliser l'assistance électrique au rotor principal 62 dès la phase de décollage par exemple.

Pour réaliser cette fonction, un moyen de blocage (non représenté) est actionné pour bloquer le premier moyen de couplage réversible 31, de telle sorte que le générateur de gaz 12 de la première turbine à gaz 10 puisse entrainer la première machine électrique 30. La première machine électrique 30 prélève ainsi de la puissance pour la restituer aux équipements électriques, tandis que la turbine libre 11 est bloquée par le frein rotor 70, alors en position de freinage.

On notera que le démarrage de la deuxième turbomachine 2 est effectué en suivant le même schéma que la première turbomachine 1, et la deuxième machine électrique 40 peut également fonctionner en mode génératrice en mode « APU », de la même façon que la première machine électrique, en bloquant le premier moyen de couplage réversible 41.

La figure 5 représente un fonctionnement nominal avec génération électrique au sol (mode « APU », rotor tournant) ou en vol. Suite au démarrage de la première turbine à gaz 10, la première turbine libre 11 entraîne le rotor principal 62 par l'intermédiaire du moyen de couplage principal 51. La première turbine libre 11 entraîne également la troisième machine électrique 50 fonctionnant alors en mode génératrice, ainsi que la première machine électrique 30 fonctionnant également en mode génératrice, le deuxième moyen de couplage réversible 32 étant bloqué.

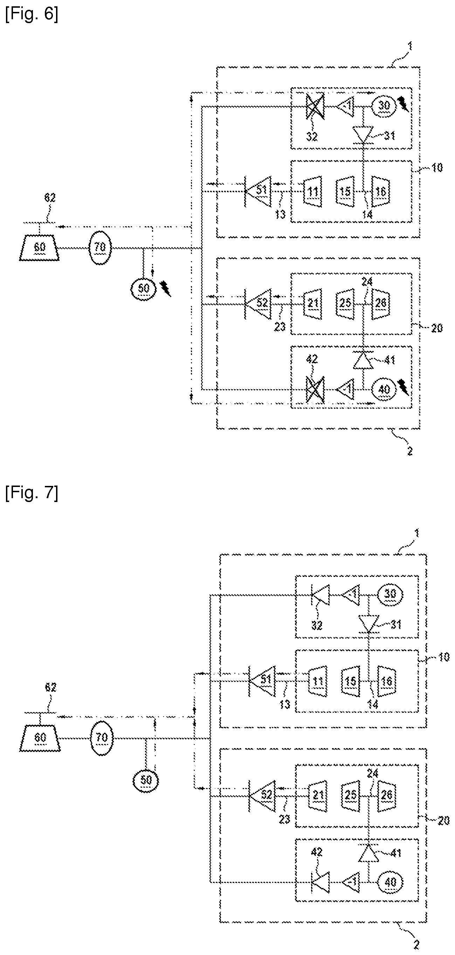

La figure 6 représente un exemple alternatif dans lequel les deux turbines à gaz 10, 20 sont allumées et entrainent le rotor principal 62 et la première et la deuxième machine électrique 30, 40 fonctionnent en mode génératrice, les deuxièmes moyens de couplage 32, 42 étant respectivement bloqués. Ce mode de fonctionnement peut être utilisé au sol ou en vol, et permet notamment de limiter les prélèvements sur les générateurs de gaz et ainsi limiter l'impact sur les performances. Cette très forte génération simultanée permet également le rechargement d'un pack batterie de forte puissance par exemple.

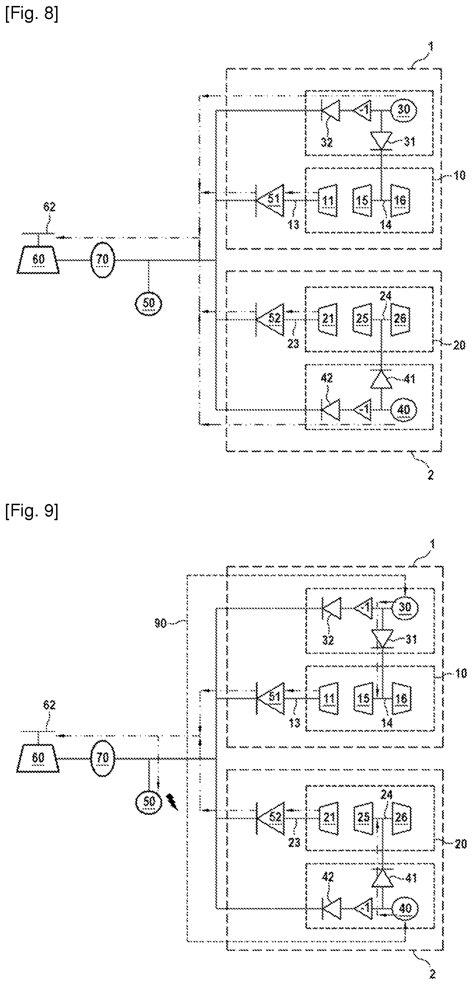

La figure 7 représente un fonctionnement nominal permettant un apport de puissance au rotor principal 62 par la troisième machine électrique 50 et la figure 8 représente un fonctionnement nominal permettant un apport de puissance au rotor principal 62 par la première et la deuxième machine électrique 30, 40, chacune fonctionnant en mode moteur électrique, et tournant alors dans le sens négatif. Cette configuration peut être utile dans certaines phases de vol nécessitant un apport de puissance supplémentaire, par exemple au décollage. La première machine électrique 30 et la deuxième machine électrique 40 permettent ainsi de compléter la puissance apportée au rotor principal 62 par les turbines libres 11, 21. On notera que cet apport de puissance au rotor principal 62 est ponctuel, et potentiellement récurrent, et ne nécessite pas de système actif comme un crabot ou un embrayage. Ainsi, les roues libres présentent un avantage en termes de fiabilité.

La figure 9 représente un fonctionnement nominal avec apport de puissance sur les arbres 14, 24 des générateurs de gaz pour améliorer la réactivité lors des phases transitoires. Dans certaines phases de vol, par exemple lors d'appels de couple importants, la vitesse de rotation des turbines libres peut chuter brutalement et nécessiter une forte réactivité du générateur de gaz 12, 22. Dans ce cas, la première et/ou la deuxième machine électrique 30, 40 peuvent, en tournant dans le sens positif, contribuer à l'accélération de la vitesse du générateur de gaz 12, 22 pour délivrer au plus vite la puissance requise. La puissance peut provenir d'un pack de batterie (non représenté), mais également de la troisième machine électrique 50, comme illustré sur la figure 9. La troisième machine électrique 50 fonctionne alors en mode génératrice, et est relié électriquement à la première et à la deuxième machine électrique 30, 40 via une connexion électrique 90.

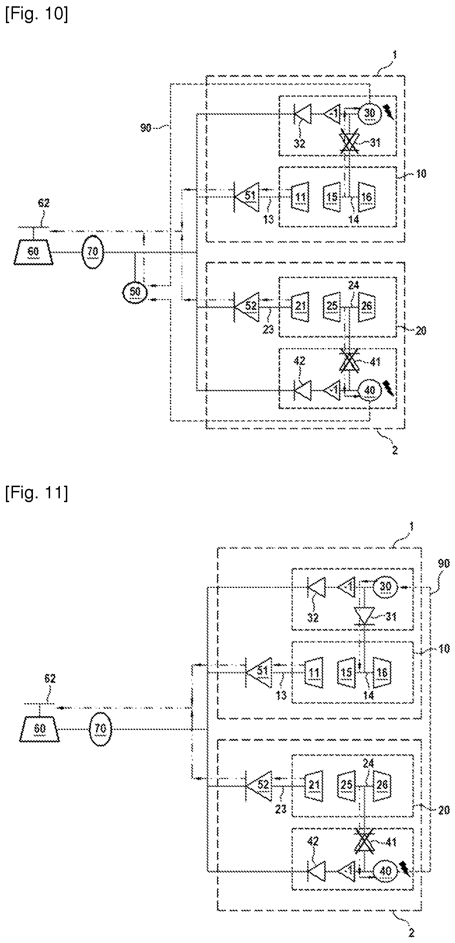

La figure 10 représente un fonctionnement nominal bimoteur avec hybridation interne et transfert de puissance du générateur de gaz vers le rotor principal. Dans certaines phases de vol en bimoteur, il peut être utile de réaliser de l'hybridation interne, c'est-à-dire des transferts de puissance entre le rotor principal et les générateurs de gaz, ou inversement. Sur la figure 10, les premiers moyens de couplage 31, 41 sont bloqués. La première et la deuxième machine électrique 30, 40 fonctionnent alors en mode génératrice, et transfèrent de l'énergie électrique à la troisième machine électrique 50 par l'intermédiaire d'une connexion électrique 90, la troisième machine électrique fonctionnant elle-même en mode moteur pour entrainer le rotor principal 62.

Les figures 11 et 12 représentent d'autres exemples de fonctionnement avec hybridation interne. Sur un ensemble bimoteur, il peut apparaitre que la première turbomachine 1 (par exemple) atteigne sa fatigue cyclique plus rapidement que la deuxième turbomachine 2. Il est alors possible, en l'absence notamment de troisième machine électrique, de faire une hybridation interne asymétrique, en utilisant la deuxième machine électrique 40 pour générer de la puissance électrique au travers du premier ou du deuxième moyen de couplage réversible 41, 42, de manière à assister la première turbine à gaz 10.

Ainsi, sur la figure 11, la deuxième machine électrique 40 fonctionne en mode génératrice en prélevant de la puissance sur l'arbre 24 du générateur de gaz 22, le premier moyen de couplage réversible 41 étant bloqué. Sur la figure 12, la deuxième machine électrique 40 fonctionne en mode génératrice en prélevant de la puissance sur le rotor principal 62, le deuxième moyen de couplage réversible 42 étant bloqué. Dans les deux configurations, la puissance est transférer de la deuxième machine électrique 40 vers la première machine électrique 30 (qui fonctionne en mode moteur en tournant dans le sens positif) via une connexion électrique 90.

La figure 13 représente un fonctionnement en cas d'extinction involontaire d'une des turbomachines en vol. En cas d'extinction de la deuxième turbomachine 2, selon l'exemple de la figure 13, la première turbomachine 1 fournit l'intégralité de la puissance au rotor principal 62. La deuxième machine électrique 40 tourne alors dans le sens positif pour entrainer, via le premier moyen de couplage réversible 41, le générateur de gaz 22 de la deuxième turbine à gaz 20, pour tenter de redémarrer celui-ci. La puissance de la deuxième machine électrique 40 étant de l'ordre de plusieurs dizaines à quelques centaines de kilowatts, il est possible de démarrer le générateur de gaz 22 beaucoup plus rapidement qu'avec un démarreur d'une puissance de l'ordre de 10kW, habituellement utilisé. Par ailleurs, la première et/ou la troisième machine électrique 30, 50 (la première machine électrique 30 tournant alors dans le sens négatif en mode moteur) peuvent être utilisées pour fournir un complément de puissance au rotor principal 62, évitant ou retardant ainsi l'utilisation des régimes d'urgence de la deuxième turbomachine 2.

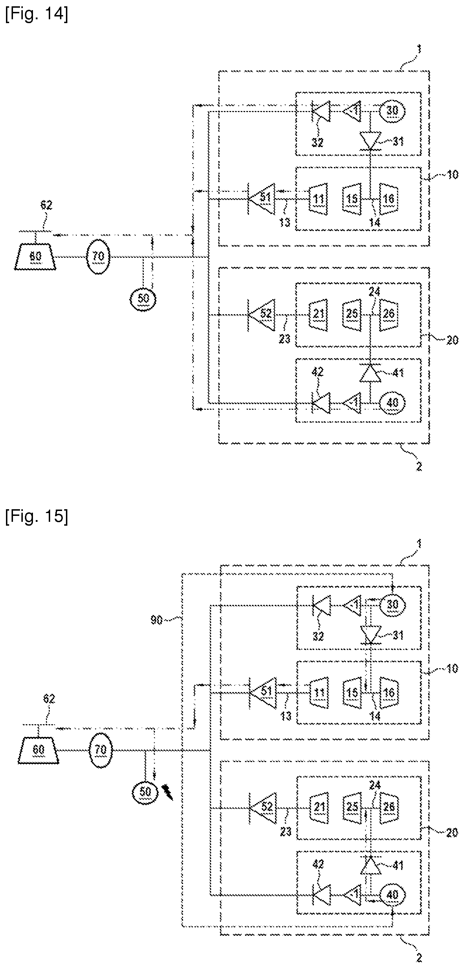

Si la tentative de redémarrage échoue, ou si elle n'est pas possible, le vol peut se poursuivre sur une seule turbine (dans cet exemple, sur la première turbine à gaz 10), avec la première et/ou la deuxième et/ou la troisième machine électrique 30, 40, 50 utilisées en mode moteur pour fournir un apport de puissance au rotor principal 62 dans les phases de fonctionnement qui le nécessitent (par exemple dégagement d'une zone dangereuse ou atterrissage), dans la limite d'utilisation des batteries. Cette configuration est représentée sur la figure 14.

Les figures 15 et 16 représentent un fonctionnement en mode SEO (pour « Single Engine Operative » en anglais), dans lequel seule la première turbomachine 1 est en fonctionnement, assurant l'intégralité de la fourniture de puissance au rotor principal 62, la deuxième turbomachine 2 étant volontairement arrêtée. Lorsque le mode SEO est engagé, la deuxième turbine à gaz 20 est mise en veille (ou en super-ralenti assisté), c'est-à-dire qu'elle ne fournit plus de puissance. En revanche, pour être démarrée le plus vite possible, son générateur de gaz 22 est entrainé dans la fenêtre d'allumage (dans une plage de 5 à 30% de sa vitesse de rotation nominale) par la deuxième machine électrique 40 via le premier moyen de couplage réversible 41.

Dans l'exemple représenté sur la figure 15, une troisième machine électrique 50 est utilisée en mode génératrice pour alimenter, via la connexion électrique 90, la deuxième machine électrique 40 qui maintient la deuxième turbine à gaz 20 en veille, et également la première machine électrique 30 pour réaliser l'hybridation interne et limiter le vieillissement de la première turbine à gaz 10. On notera que la troisième machine électrique 50 peut également être utilisée en mode moteur pour compléter la puissance fournie par la première turbine à gaz 10 au rotor principal 62, dans certaines phases de fonctionnement le nécessitant.

Dans l'exemple représenté sur la figure 16, des embrayages 81, 82 sont utilisés à la place de la troisième machine électrique 50. Plus précisément, le deuxième embrayage 82 est placé en position de couplage de manière à coupler le rotor principal 62 avec le générateur de gaz 22 de la deuxième turbine à gaz 20, afin de maintenir la deuxième turbine à gaz 20 en veille, sans utiliser la deuxième machine électrique 40. Dans cette configuration, deuxième machine électrique 40 est alors utilisée en mode génératrice, en bloquant le deuxième moyen de couplage réversible 42, de manière à réaliser l'hybridation interne (via la connexion électrique 90) entre la deuxième machine électrique 40 et la première turbine à gaz 10, tout en maintenant la deuxième turbine à gaz 20 en veille.

Lorsque la sortie du mode SEO est souhaitée, la deuxième turbine à gaz 20 est redémarrée avec la même séquence que pour un démarrage conventionnel, décrit ci-dessus en référence à la figure 3. Toutefois, en cas de perte de puissance de la première turbine à gaz 10, un redémarrage rapide de la deuxième turbine à gaz 20 peut être nécessaire. Pour ce faire, la deuxième machine électrique 40 fournit une puissance importante (de l'ordre de 50kW) au générateur de gaz 22 de la deuxième turbine à gaz 20. A la fin de la séquence, la deuxième turbine à gaz 20 fournit l'intégralité de la puissance, éventuellement à un régime d'urgence.

De manière avantageuse, entre la perte de puissance de la première turbine à gaz 10 et la mise à disposition de la puissance de la deuxième turbine à gaz 20 par rallumage de cette dernière, la troisième (lorsque celle-ci est utilisée) et/ou la première (tournant dans le sens négatif) machines électriques 50, 30 peuvent être mises à contribution pour fournir de la puissance au rotor principal 62 et limiter la chute de vitesse de celui-ci. Ce mode de fonctionnement de redémarrage rapide de la deuxième turbine à gaz 20 avec l'assistance de la première et de la troisième machine électrique 30, 50 est représenté sur la figure 17.

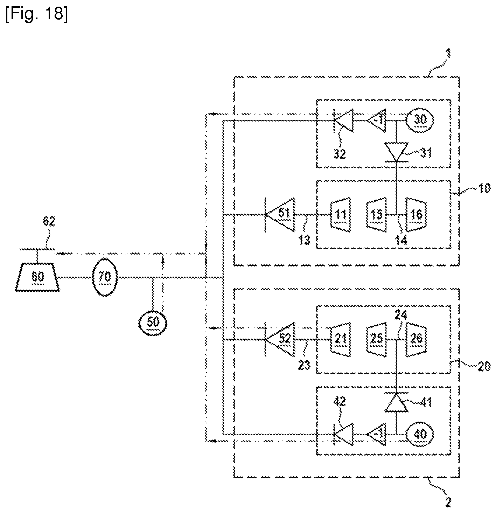

Après rallumage de la deuxième turbine à gaz 20, la première et/ou la deuxième et/ou la troisième machine électrique 30, 40, 50 peuvent être utilisées en mode moteur pour alimenter le rotor principal 62 et ainsi soulager la deuxième turbine à gaz 20 fonctionnant seule. Cette configuration est représentée sur la figure 18. De manière alternative, elles peuvent être utilisées en mode génératrice, si la deuxième turbine à gaz 20 est en mesure de fournir la puissance nécessaire pour recharger le pack de batterie et prévenir une potentielle utilisation ultérieure.

On notera qu'il est également possible d'utiliser des moyens de désacouplement tels que des sections à casser, afin de limiter les risques en cas de défaillances de composants. En particulier, une section à casser peut être installée sur les entrainements des première, deuxième et troisième machines électriques 30, 40, 50 afin de protéger les organes d'une défaillance des machines électriques. Il est également possible d'ajouter une section à casser sur les arbres des première et deuxième machines électriques 30, 40 pour se prémunir d'un éventuel surcouple de la machine électrique, et protéger les pignons et les roues-libres. De telles sections à casser pourraient de manière similaire prévenir un éventuel blocage du générateur de gaz 10, 20 de la turbine en mode veille et entrainée par les embrayages 81, 82.

Bien que la présente invention ait été décrite en se référant à des exemples de réalisation spécifiques, **il** est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Ensemble propulsif (100) pour aéronef hybridé, notamment d'hélicoptère multi-moteurs, comprenant :
- au moins une première turbine à gaz (10) et une deuxième turbine à gaz (20) ayant chacune un générateur de gaz (12, 22) et une turbine libre (11, 21) entraînée en rotation par un flux de gaz généré par le générateur de gaz,
- un rotor principal (62) couplé à la turbine libre (11, 21) de la première turbine à gaz (10) et de la deuxième turbine à gaz (20) par l'intermédiaire d'un premier et d'un deuxième moyen de couplage principal (51, 52) respectivement,
- une première machine électrique réversible (30) et une deuxième machine électrique réversible (40) chacune couplée au générateur de gaz (12, 22) de la première turbine à gaz (10) et de la deuxième turbine à gaz (20) respectivement, par l'intermédiaire d'un premier moyen de couplage désactivable (31, 41), et chacune couplée au rotor principal (62) par l'intermédiaire d'un deuxième moyen de couplage désactivable (32, 42), les premiers moyens de couplage désactivables (31, 41) étant chacun configurés pour être activés lorsque la première et la deuxième machine électrique (30, 40) tournent dans un premier sens de rotation, et les deuxièmes moyens de couplage désactivables (32, 42) étant configurés pour être activés lorsque la première et la deuxième machine électrique (30, 40) tournent dans un deuxième sens de rotation opposé au premier sens de rotation.

2. Ensemble propulsif (100) selon la revendication 1, dans lequel la première machine électrique (30) et la deuxième machine électrique (40) sont configurées pour fonctionner en mode moteur dans lequel elles sont aptes à apporter de la puissance au rotor principal (62) ou au générateur de gaz (12, 22) de la première et de la deuxième turbine à gaz (10, 20) respectivement, selon leur sens de rotation, ou en mode génératrice dans lequel elles sont aptes à être entraînées en rotation par le rotor principal (62) ou par ledit générateur de gaz (12, 22) en bloquant l'un ou l'autre du premier ou du deuxième moyen de couplage desactivable, de manière à générer de l'énergie électrique.

3. Ensemble propulsif (100) selon la revendication 1 ou 2, comprenant un premier moyen d'accouplement (81) couplé au rotor principal (62) et au générateur de gaz (12) de la première turbine à gaz (10), et un deuxième moyen d'accouplement (82) couplé au rotor principal (62) et au générateur de gaz (22) de la deuxième turbine à gaz (20), le premier et le deuxième moyen d'accouplement (81, 82) étant mobiles entre une position de découplage, et une position de couplage dans laquelle le rotor principal (62) est couplé avec le générateur de gaz (12, 22) de la première et de la deuxième turbine à gaz respectivement.

4. Ensemble propulsif (100) selon la revendication 3, dans lequel, lorsque l'une de la première ou de la deuxième turbine à gaz (10, 20) entraine seule le rotor principal (62), le générateur de gaz (12, 22) de l'autre de la première ou de la deuxième turbine à gaz (10, 20) est maintenu dans un mode veille, à une puissance inférieure à 5kW, par l'intermédiaire du premier ou du deuxième moyen d'accouplement (81, 82) en position de couplage.

5. Ensemble propulsif (100) selon la revendication 2 et l'une quelconque des revendications 3 ou 4, dans lequel, lorsque la première turbine à gaz (10) entraine seule le rotor principal (62), la première machine électrique (30) fonctionne en mode moteur de manière à apporter de la puissance au générateur de gaz (12) de la première turbine à gaz (10), et la deuxième machine électrique (40) fonctionne en mode génératrice de manière à apporter de l'énergie électrique à la première machine électrique (30).

6. Ensemble propulsif (100) selon la revendication 2 et l'une quelconque des revendications 3 ou 4, configuré de telle sorte que, lorsque la première turbine à gaz (10) entrainant seule le rotor principal (62) s'arrête, la deuxième machine électrique (40) fonctionne en mode moteur de manière à apporter une puissance supérieure ou égale à 50 kW au générateur de gaz (22) de la deuxième turbine à gaz (20).

7. Ensemble propulsif (100) selon la revendication 1 ou 2, comprenant une troisième machine électrique réversible (50) apte à être couplée au rotor principal (62) et à la turbine libre (11, 21) de la première turbine à gaz (10) et de la deuxième turbine à gaz (20) par l'intermédiaire du premier moyen de couplage principal (51) et du deuxième moyen de couplage principal (52) respectivement.

8. Ensemble propulsif (100) selon la revendication 7, dans lequel la troisième machine électrique (50) est configurée pour fonctionner en mode génératrice, dans lequel elle est apte à être entraînée en rotation par le rotor principal (62), lui-même entrainé par la turbine libre (11, 21) de la première et/ou de la deuxième turbine à gaz (10, 20) par l'intermédiaire du premier et/ou du deuxième moyen de couplage principal (51, 52), de manière à générer de l'énergie électrique, ou en mode moteur dans lequel elle est apte à apporter de la puissance au rotor principal (62).

9. Ensemble propulsif (100) selon la revendication 8 dans lequel, lorsque la première turbine à gaz (10) entraine seule le rotor principal (62), le générateur de gaz (22) de la deuxième turbine à gaz (22) est maintenu dans un mode veille, à une puissance inférieure à 5kW, par l'intermédiaire de la deuxième machine électrique (40) qui fonctionne en mode moteur, la première machine électrique (30) fonctionnant en mode moteur de manière à apporter de la puissance au générateur de gaz (12) de la première turbine à gaz (10), et la troisième machine électrique (50) fonctionne en mode génératrice de manière à apporter de l'énergie électrique à la première et à la deuxième machine électrique (30, 40).

10. Ensemole propulsif (100) selon l'une quelconque des revendications 1 à 9, dans lequel le premier et le deuxième moyen de couplage principal (51, 52), et le premier et deuxième moyens de couplage désactivables (31, 41, 32, 42) associés à chacune de la première et de la deuxième machine électrique (30 ,40), comprennent une roue libre.

11. Aéronef hybridé comprenant un ensemble propulsif (100) selon l'une quelconque des revendications précédentes, l'aéronef hybridé étant un hélicoptère multi moteurs, notamment bimoteur.

## Patentansprüche

1. Antriebseinheit (100) für Hybridflugzeug, insbesondere mehrmotorigen Hubschrauber, umfassend:
- mindestens eine erste Gasturbine (10) und eine zweite Gasturbine (20), die jeweils einen Gasgenerator (12, 22) und eine freie Turbine (11, 21) aufweisen, die durch einen Gasstrom in Drehung versetzt wird, der von dem Gasgenerator erzeugt wird,
- einen Hauptrotor (62), der jeweils über eine erste und eine zweite Hauptkupplungseinrichtung (51, 52) mit der freien Turbine (11, 21) der ersten Gasturbine (10) und der zweiten Gasturbine (20) gekoppelt ist,
- eine erste umkehrbare elektrische Maschine (30) und eine zweite umkehrbare elektrische Maschine (40), die über eine erste deaktivierbare Kupplungseinrichtung (31, 41) jeweils mit dem Gasgenerator (12, 22) der jeweils ersten Gasturbine (10) und der zweiten Gasturbine (20) gekoppelt sind, und über eine zweite deaktivierbare Kupplungseinrichtung (32, 42) jeweils mit dem Hauptrotor (62) gekoppelt sind, wobei die ersten deaktivierbaren Kupplungseinrichtungen (31, 41) jeweils konfiguriert sind, um aktiviert zu werden, wenn die erste und die zweite elektrische Maschine (30, 40) in einer ersten Drehrichtung drehen, und die zweiten deaktivierbaren Kupplungseinrichtungen (32, 42) konfiguriert sind, um aktiviert zu werden, wenn die erste und die zweite elektrische Maschine (30, 40) in einer zweiten Drehrichtung entgegengesetzt zu der ersten Drehrichtung drehen.

2. Antriebsanordnung (100) nach Anspruch 1, wobei die erste elektrische Maschine (30) und die zweite elektrische Maschine (40) konfiguriert sind, um in einem Motormodus betrieben zu werden, in dem sie geeignet sind, dem Hauptrotor (62) oder dem Gasgenerator (12, 22) jeweils der ersten und der zweiten Gasturbine (10, 20) Leistung zuzuführen, je nach ihrer Drehrichtung, oder in dem Generatormodus, in dem sie geeignet sind, durch den Hauptrotor (62) oder den Gasgenerator (12, 22) durch Blockieren der einen oder der anderen von der ersten oder zweiten deaktivierbaren Kupplungseinrichtung in Drehung versetzt zu werden, um elektrische Energie zu erzeugen.

3. Antriebsanordnung (100) nach Anspruch 1 oder 2, umfassend eine erste Kupplungseinrichtung (81), die mit dem Hauptrotor (62) und dem Gasgenerator (12) der ersten Gasturbine (10) gekoppelt ist, und eine zweite Kupplungseinrichtung (82), die mit dem Hauptrotor (62) und dem Gasgenerator (22) der zweiten Gasturbine (20) gekoppelt ist, wobei die erste und die zweite Kupplungseinrichtung (81, 82) zwischen einer Entkupplungsposition, und einer Kupplungsposition, in der der Hauptrotor (62) mit dem Gasgenerator (12, 22) jeweils der ersten und der zweiten Gasturbine gekoppelt ist, bewegbar sind.

4. Antriebsanordnung (100) nach Anspruch 3, wobei, wenn entweder die erste oder die zweite Gasturbine (10, 20) nur den Hauptrotor (62) antreibt, der Gasgenerator (12, 22) der anderen von der ersten oder der zweiten Gasturbine (10, 20) über die erste oder die zweite Kupplungseinrichtung (81, 82) in der Kupplungsposition in einem Standby-Modus mit einer Leistung von weniger als 5 kW gehalten wird.

5. Antriebsanordnung (100) nach Anspruch 2 und einem der Ansprüche 3 oder 4, wobei, wenn die erste Gasturbine (10) nur den Hauptrotor (62) antreibt, die erste elektrische Maschine (30) in dem Motorbetrieb betrieben wird, um dem Gasgenerator (12) der ersten Gasturbine (10) Leistung zuzuführen, und die zweite elektrische Maschine (40) in dem Generatormodus betrieben wird, um der ersten elektrischen Maschine (30) elektrische Energie zuzuführen.

6. Antriebsanordnung (100) nach Anspruch 2 und einem der Ansprüche 3 oder 4, die konfiguriert ist, sodass, wenn die erste Gasturbine (10), die nur den Hauptrotor (62) antreibt, zum Stillstand kommt, die zweite elektrische Maschine (40) in dem Motorbetrieb betrieben wird, um dem Gasgenerator (22) der zweiten Gasturbine (20) eine Leistung von 50 kW oder mehr zuzuführen.

7. Antriebsanordnung (100) nach Anspruch 1 oder 2, umfassend eine dritte reversible elektrische Maschine (50), die geeignet ist, jeweils über die erste Hauptkupplungseinrichtung (51) und die zweite Hauptkupplungseinrichtung (52) mit dem Hauptrotor (62) und der freien Turbine (11, 21) der ersten Gasturbine (10) und der zweiten Gasturbine (20) gekuppelt zu werden.

8. Antriebsanordnung (100) nach Anspruch 7, wobei die dritte elektrische Maschine (50) konfiguriert ist, um in einem Generatormodus, in dem sie geeignet ist, um durch den Hauptrotor (62), der seinerseits über die erste und/oder die zweite Hauptkupplungseinrichtung (51, 52) durch die freie Turbine (11, 21) der ersten und/oder zweiten Gasturbine (10, 20) angetrieben wird, in Drehung versetzt zu werden, um elektrische Energie zu erzeugen, oder in einem Motormodus, in dem sie geeignet ist, um dem Hauptrotor (62) Leistung zuzuführen, betrieben zu werden.

9. Antriebsanordnung (100) nach Anspruch 8, wobei, wenn die erste Gasturbine (10) nur den Hauptrotor (62) antreibt, der Gasgenerator (22) der zweiten Gasturbine (22) über die zweite elektrische Maschine (40), die in dem Motorbetrieb betrieben wird, in einem Standby-Modus mit einer Leistung von weniger als 5 kW gehalten wird, wobei die erste elektrische Maschine (30) in dem Motorbetrieb betrieben wird, um dem Gasgenerator (12) der ersten Gasturbine (10) Leistung zuzuführen, und die dritte elektrische Maschine (50) in dem Generatormodus betrieben wird, um der ersten und der zweiten elektrischen Maschine (30, 40) elektrische Energie zuzuführen.

10. Antriebsanordnung (100) nach einem der Ansprüche 1 bis 9, wobei die erste und die zweite Hauptkupplungseinrichtung (51, 52) und die erste und die zweite deaktivierbare Kupplungseinrichtung (31, 41, 32, 42), die jeweils mit der ersten und der zweiten elektrischen Maschine (30, 40) assoziiert sind, ein Freilaufrad umfassen.

11. Hybrides Luftfahrzeug, umfassend eine Antriebseinheit (100) nach einem der vorherigen Ansprüche, wobei das hybride Luftfahrzeug ein mehrmotoriger, insbesondere zweimotoriger Hubschrauber ist.

## Claims

1. A propulsive assembly (100) for a hybrid aircraft, particularly a multi-engine helicopter, comprising:
- at least a first gas turbine (10) and a second gas turbine (20) each having a gas generator (12, 22) and a free power turbine (11, 21) rotationally driven by a stream of gas generated by the gas generator,
- a main rotor (62) coupled to the free power turbine (11, 21) of the first gas turbine (10) and of the second gas turbine (20) by way of a first and a second main coupling means (51, 52) respectively,
- a first reversible electric machine (30) and a second reversible electric machine (40) each coupled to the gas generator (12, 22) of the first gas turbine (10) and of the second gas turbine (20) respectively, by way of a first deactivatable coupling means (31, 41), and each coupled to the main rotor (62) by way of a second deactivatable coupling means (32, 42), the first deactivatable coupling means (31, 41) being each configured to be activated when the first and the second electric machine (30, 40) are rotating in a first direction of rotation, and the second deactivatable coupling means (32, 42) being configured to be activated when the first and the second electric machine (30, 40) are rotating in a second direction of rotation opposite to the first direction of rotation.

2. The propulsive assembly (100) as claimed in claim 1, wherein the first electric machine (30) and the second electric machine (40) are configured to operate in motor mode in which they are able to input power to the main rotor (62) or to the gas generator (12, 22) of the first and of the second gas turbine (10, 20) respectively, according to their direction of rotation, or in generator mode in which they are able to be rotationally driven by the main rotor (62) or by said gas generator (12, 22) by locking one or the other of the first or the second deactivatable coupling means, in such a way as to generate electrical energy.

3. The propulsive assembly (100) as claimed in claim 1 or 2, comprising a first coupling means (81) coupled to the main rotor (62) and to the gas generator (12) of the first gas turbine (10), and a second coupling means (82) coupled to the main rotor (62) and to the gas generator (22) of the second gas turbine (20), the first and the second coupling means (81, 82) being movable between a decoupling position, and a coupling position in which the main rotor (62) is coupled with the gas generator (12, 22) of the first and of the second gas turbine respectively.

4. The propulsive assembly (100) as claimed in claim 3, wherein, when one of the first or the second gas turbine (10, 20) is the only one driving the main rotor (62), the gas generator (12, 22) of the other of the first or the second gas turbine (10, 20) is kept in a standby mode, at a power of less than 5kW, by way of the first or the second coupling means (81, 82) in the coupling position.

5. The propulsive assembly (100) as claimed in claim 2 and any of claims 3 or 4, wherein, when the first gas turbine (10) is the only one driving the main rotor (62), the first electric machine (30) operates in motor mode in such a way as to input power to the gas generator (12) of the first gas turbine (10), and the second electric machine (40) operates in generator mode in such a way as to input electrical energy to the first electric machine (30).

6. The propulsive assembly (100) as claimed in claim 2 and any of claims 3 or 4, configured so that, when the first gas turbine (10) that is the only one driving the main rotor (62) stops, the second electric machine (40) operates in motor mode in such a way as to input a power greater than or equal to 50 kW to the gas generator (22) of the second gas turbine (20).

7. The propulsive assembly (100) as claimed in claim 1 or 2, comprising a third reversible electric machine (50) able to be coupled to the main rotor (62) and to the free power turbine (11, 21) of the first gas turbine (10) and of the second gas turbine (20) by way of the first main coupling means (51) and the second main coupling means (52) respectively.

8. The propulsive assembly (100) as claimed in claim 7, wherein the third electric machine (50) is configured to operate in generator mode, in which it is able to be rotationally driven by the main rotor (62), itself driven by the free power turbine (11, 21) of the first and/or of the second gas turbine (10, 20) by way of the first and/or the second main coupling means (51, 52), in such a way as to generate electrical energy, or in motor mode in which it is able to input power to the main rotor (62).

9. The propulsive assembly (100) as claimed in claim 8 wherein, when the first gas turbine (10) is the only one driving the main rotor (62), the gas generator (22) of the second gas turbine (22) is kept in standby mode, at a power of less than 5kW, by way of the second electric machine (40) which operates in motor mode, the first electric machine (30) operating in motor mode in such a way as to input power to the gas generator (12) of the first gas turbine (10), and the third electric machine (50) operates in generator mode in such a way as to input electrical energy to the first and to the second electric machine (30, 40).

10. The propulsive assembly (100) as claimed in any of claims 1 to 9, wherein the first and the second main coupling means (51, 52), and the first and the second deactivatable coupling means (31, 41, 32, 42) associated with each of the first and the second electric machine (30 ,40), comprise a free wheel.

11. A hybrid aircraft comprising a propulsive assembly (100) as claimed in any of the preceding claims, the hybrid aircraft being a multi-engine helicopter, particularly a twin-engine helicopter.
